# FASCICULE DE BREVET EUROPEEN

(11) **EP 3 463 007 B1**
(45) Date de publication et mention de la délivrance du brevet: **29.04.2020**
(21) Numéro de dépôt: 17731622.1
(22) Date de dépôt: 30.05.2017
(51) Int. Cl.: A47J 31/40

(54) **MACHINE A CAFÉ ÉQUIPÉE D'UN DISPOSITIF DE TRANSFERT DE MOUTURE**
KAFFEEMASCHINE MIT EINER VORRICHTUNG ZUM ÜBERFÜHREN VON GEMAHLENEM KAFFEE
COFFEE MACHINE COMPRISING A DEVICE FOR TRANSFERRING COFFEE GROUNDS

(30) Priorité: 02.06.2016 FR 1655050
(43) Date de publication de la demande: 10.04.2019
(73) Titulaire: SEB S.A., 69130 Ecully (FR)
(72) Inventeur: MORIN, Gilles, 21490 Varois Et Chaignot (FR); RUSSIER, Fabien, 21000 Dijon (FR)
(74) Mandataire: Bourrières, Patrice
(86) Numéro de dépôt international: PCT/FR2017/051349
(87) Numéro de publication internationale: WO 2017/207918

(56) Documents cités:
- WO-A1-2004/112554
- US-A- 3 305 139

## Description

La présente invention concerne une machine à café qui est équipée d'un réservoir de stockage de café moulu, d'un porte-filtre constituant une zone d'infusion et d'un dispositif de transfert de mouture de café du réservoir vers le porte-filtre, de l'eau chaude étant apte à être déversée dans le porte-filtre contenant de la mouture en vue de la préparation de la boisson de café.

L'invention porte tout particulièrement sur le dispositif de transfert de la mouture agencé sur la machine à café.

### Etat de la technique

Les machines à café existent depuis de nombreuses années, celles-ci sont très bien connues de l'homme du métier.

Une machine à café comporte traditionnellement un porte-filtre permettant la réception d'un filtre dans lequel est disposée de la mouture de café lors de la préparation de la boisson de café. La machine à café comprend un réservoir d'eau et un système de distribution d'eau chaude configuré pour puiser l'eau dans le réservoir, pour chauffer cette eau puis pour déverser l'eau chaude dans le porte-filtre contenant la mouture de café. L'eau chaude déversée sur la mouture de café permet son infusion, le mélange étant alors filtré pour en extraire la boisson de café, le marc de café restant contenu dans le filtre usagé.

Certaines machines à café sont équipées d'un réservoir de stockage de café moulu et d'un dispositif de transfert de la mouture du réservoir de stockage vers le porte-filtre. Ce type de machine à café présente pour avantage d'éviter le stockage du paquet de café moulu entamé dans un lieu de rangement, nécessitant de sortir ledit paquet chaque fois qu'il convient de remplir le porte-filtre pour la préparation d'une boisson de café.

A titre d'exemple, les demandes de brevet publiées sous les numéros WO8912416A2, WO2004112554A1, EP1654968A1 et EP1854387A2 divulguent de telles machines à café qui comportent un porte-filtre constituant une zone d'infusion, un réservoir de stockage de café moulu agencé au-dessus de la zone d'infusion et un dispositif de transfert de mouture du réservoir de stockage vers la zone d'infusion.

Selon le document WO8912416A2, le dispositif de transfert comporte une pièce, du type piston, animée d'un mouvement de va et vient et entrainée manuellement, ladite pièce permettant le transfert d'une dose de mouture au travers d'un orifice de distribution.

Selon le document WO2004112554A1, la machine à café comporte un moteur qui entraîne une pale assurant le transfert de café moulu du réservoir de stockage vers la zone d'infusion, à travers un orifice de distribution. Le réservoir de stockage comporte une pièce d'ouverture et de fermeture de l'orifice de distribution, ladite pièce étant mobile manuellement.

Selon le document EP1654968A1, la machine à café comprend un piston presseur permettant de compacter la mouture dans la zone d'infusion, et des moyens d'actionnement permettant de coulisser le piston presseur relativement à la zone d'infusion, d'une position de repos dans laquelle le piston se trouve à l'extérieur de la zone d'infusion jusqu'à une position de travail à l'intérieur de la zone d'infusion. La machine à café comprend un réservoir de stockage de la mouture qui comporte un orifice de distribution communiquant avec une goulotte apte à canaliser ledit produit vers la zone d'infusion. Cette goulotte est amenée en contact avec un dispositif de nettoyage qui est entraîné par le piston presseur ou par la zone d'infusion sur au moins une partie de leur course. Le dispositif de nettoyage comprend un racloir qui nettoie la goulotte de manière automatique. Ce nettoyage évite un encrassement de la goulotte dû à l'humidité, en particulier lors de successions de cycles de préparation de café.

Selon le document EP1854387A2, la machine à café comprend une zone d'infusion et un réservoir de stockage de mouture qui comporte un orifice de distribution communiquant avec une goulotte apte à canaliser la mouture vers la zone d'infusion. La machine à café comprend également un dispositif de nettoyage automatique de la goulotte. Ce dispositif de nettoyage automatique comprend un bras d'essuyage disposé à l'intérieur de la goulotte et actionné par un mécanisme à entraînement électrique.

Ces dispositifs de transfert de la mouture, décrits dans les documents précités, présentent pour avantage d'éviter la remontée d'humidité vers le réservoir de stockage de la mouture.

### Résumé de l'invention

La présente invention a pour objet de mettre en oeuvre une machine à café dont le dispositif de transfert de mouture du réservoir de stockage de la mouture vers la zone d'infusion est simple de conception, évite la remontée d'humidité vers le réservoir de stockage de la mouture de café, et est sans risque d'encrassement.

A cet effet, la machine à café selon l'invention comporte une zone d'infusion notamment constituée par un porte-filtre, un réservoir de stockage de café moulu agencé au-dessus de la zone d'infusion et un dispositif de transfert de mouture du réservoir de stockage vers la zone d'infusion à travers un orifice de distribution. Le dispositif de transfert comporte un organe d'ouverture et de fermeture de l'orifice, cet organe étant mobile entre une position ouverte et une position fermée.

En outre, l'organe d'ouverture et de fermeture de l'orifice comporte une partie ouverte qui comprend une paroi inclinée. La paroi inclinée est configurée pour être positionnée sous l'orifice et pour diriger vers la zone d'infusion la mouture passant au travers de cet orifice en position d'ouverture, et pour être décalée de l'orifice en position fermée.

Par ailleurs, le dispositif de transfert comporte un organe de nettoyage de ladite paroi inclinée lorsqu'elle passe de la position ouverte à la position fermée et réciproquement.

Ainsi, le déplacement de l'organe dans la position ouverte assure le positionnement de la paroi inclinée sous l'orifice, ce qui libère cet orifice et permet le transfert de la mouture du réservoir de stockage vers la zone d'infusion, la pente de cette paroi inclinée assurant le guidage de la mouture vers ladite zone d'infusion. Inversement, le déplacement de l'organe dans la position fermée assure instantanément l'obturation de cet orifice.

Le nettoyage de la partie inclinée à chaque déplacement de l'organe dans un sens ou dans l'autre, évite son encrassement, ce qui garantit un dosage convenable de la mouture à chaque transfert dans la zone d'infusion.

Selon une conception préférentielle de la machine à café, la paroi inclinée est configurée pour diriger la mouture vers le centre de la zone d'infusion. Cela garantit un positionnement convenable de la mouture dans la zone d'infusion, afin que l'intégralité de cette mouture soit infusée lors du déversement de l'eau chaude dans ladite zone d'infusion. Cette configuration permet en outre d'agencer le réservoir de stockage directement au-dessus de la zone d'infusion, dans le même axe, ce qui réduit l'encombrement de la machine à café. On pourrait envisager des variantes avec une paroi inclinée dirigeant la mouture sur le côté de la zone d'infusion, voire avec un réservoir de stockage décalé du porte-filtre et une paroi inclinée agencée en conséquence pour guider la mouture dans le porte-filtre durant son transfert.

Avantageusement, l'organe de nettoyage comporte une paroi verticale coopérant avec la paroi inclinée pour la nettoyer lors du déplacement de l'organe d'ouverture et de fermeture de la position ouverte vers la position fermée et inversement.

De préférence, le dispositif de transfert comporte des moyens de translation de l'organe d'ouverture et de fermeture de l'orifice, de la position ouverte vers la position fermée et réciproquement.

Avantageusement, l'organe d'ouverture et de fermeture de l'orifice comporte une paroi horizontale qui obstrue l'orifice en position fermée. De préférence cette paroi horizontale forme avec la partie ouverte comportant la paroi inclinée une pièce monobloc.

De manière avantageuse, le dispositif de transfert de mouture comporte un levier de manœuvre de l'organe d'ouverture et de fermeture de l'orifice. De préférence, le levier de manœuvre est mobile entre une position verticale dans laquelle l'organe d'ouverture et de fermeture de l'orifice est en positon fermée, et une position horizontale dans laquelle l'organe d'ouverture et de fermeture de l'orifice est en positon ouverte. De préférence, le dispositif de transfert de mouture comporte un système pignon/crémaillère, le levier étant assujetti au pignon et la crémaillère étant assujettie à l'organe d'ouverture et de fermeture de l'orifice.

Avantageusement, le dispositif de transfert de mouture comporte un ressort de rappel de l'organe d'ouverture et de fermeture de l'orifice, de la position ouverte à la position fermée. Cela permet un retour instantané dudit organe en position d'origine, lorsque l'on cesse toute action sur celui-ci.

De préférence, le dispositif de transfert de mouture comporte un disque entrainé en rotation par un moteur. En outre, la mise en route du moteur est commandée par le déplacement en position ouverte de l'organe d'ouverture et de fermeture de l'orifice. Cela permet de transférer instantanément le café moulu du réservoir de stockage vers la zone d'infusion dès que l'orifice est ouvert. De préférence, le disque est entraîné en rotation selon un axe vertical et le moteur est agencé au centre du disque selon cet axe vertical.

### Brève description des figures

Les caractéristiques et avantages de la machine à café selon l'invention apparaîtront à la lecture de la description suivante d'un mode de réalisation préférentiel et non limitatif, s'appuyant sur des figures, parmi lesquelles :
- Les figures 1 et 2 illustrent la machine à café dans deux positions correspondant respectivement à l'obturation de l'orifice entre le réservoir de stockage et la zone d'infusion et à l'ouverture de l'orifice pour le transfert de la mouture du réservoir de stockage vers la zone d'infusion ;
- La figure 3 illustre la machine à café en coupe afin de mettre en évidence certains de ses éléments ;
- Les figures 4 et 5 illustrent respectivement en vue de dessus et en vue de dessous le réservoir de stockage avec l'organe d'ouverture et de fermeture de l'orifice en position fermée ;
- Les figures 6 et 7 illustrent en vue de dessous selon deux angles différents le réservoir de stockage avec l'organe d'ouverture et de fermeture de l'orifice en position ouverte ;
- Les figures 8 et 9 illustrent l'organe d'ouverture et de fermeture de l'orifice avec un levier de commande de cet organe, respectivement en position fermée et en position ouverte.

### Description détaillée

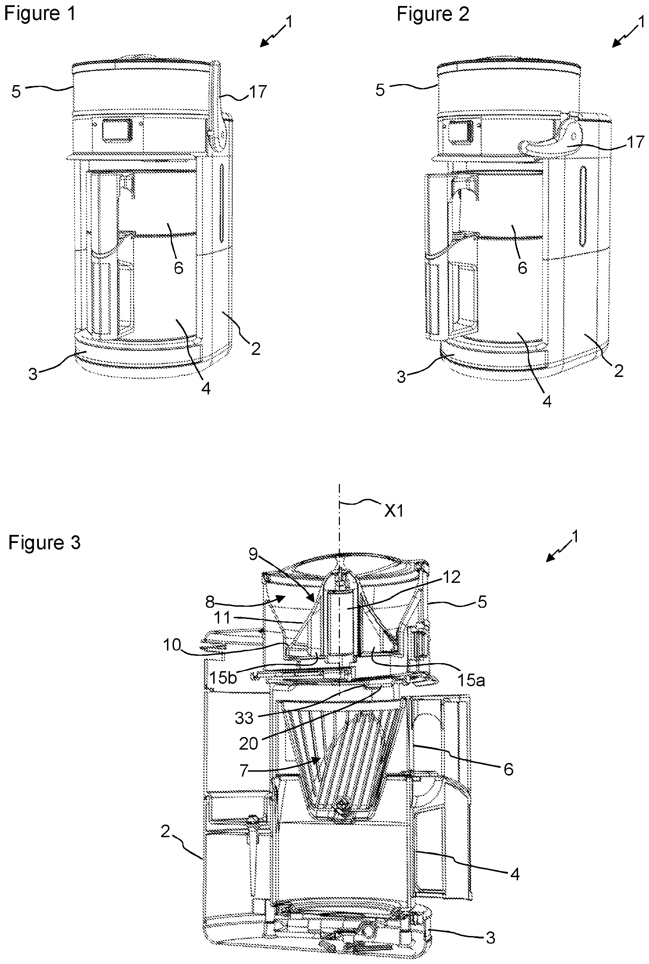

Les figures 1 à 3 montrent la machine à café 1 selon l'invention, dans un mode préféré de conception. Le terme « machine 1 » est utilisé dans la suite de la description pour définir ladite machine à café 1.

La machine 1 comprend traditionnellement un corps 2 muni d'une base chauffante 3 configurée pour réceptionner un vase 4 dans lequel est déversée la boisson de café (non illustrée). La machine 1 comprend un réservoir de stockage 5 agencé au-dessus d'un porte-filtre 6 qui définit une zone d'infusion 7.

Le réservoir de stockage 5 définit un volume 8 permettant la réception d'une certaine quantité de café moulu, par exemple l'équivalent d'un paquet de 250 grammes de café moulu, que l'on trouve généralement en vente dans le commerce. Ce réservoir de stockage 5 intègre une turbine 9 qui comprend un disque 10 à sa base, ledit disque 10 étant prolongé vers le haut par un corps 11 plus ou moins en forme de cloche. Cette turbine 9 est entraînée en rotation selon un premier axe X1 vertical au moyen d'un moteur 12 agencé selon cet axe X1 à l'intérieur du corps 11, comme l'illustre la figure 3. On constate sur les figures 1 à 3 que le réservoir de stockage 5 est agencé dans le même axe vertical que le porte-filtre 6 et que le vase 4, en l'occurrence l'axe X1.

Le réservoir de stockage 5 comprend un fond 13 muni d'un orifice 14 permettant le passage de la mouture de café dudit réservoir de stockage 5 vers la zone d'infusion 7 du porte-filtre 6. Le disque 10 est positionné au-dessus du fond 13 et de l'orifice 14. Le disque 10 comporte des pales 15a, 15b permettant d'amener de la mouture de café vers l'orifice 14 durant la rotation dudit disque 10, de sorte à la transférer du réservoir de stockage 5 vers le porte-filtre 6, lorsque cet orifice 14 est dégagé, comme cela est expliqué dans la suite de la description.

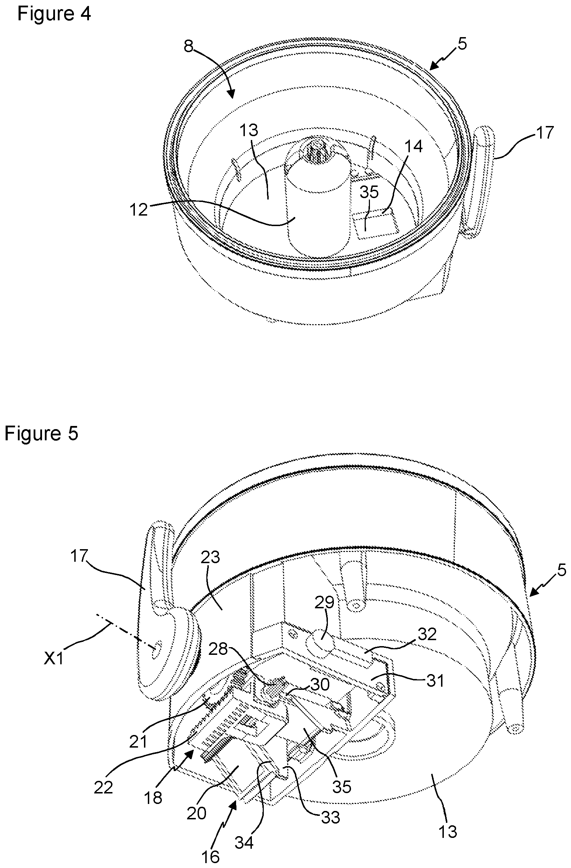

La machine 1 comprend un organe d'ouverture et de fermeture 16 de l'orifice 14. L'organe d'ouverture et de fermeture 16 est actionné au moyen d'un levier de manœuvre 17 agissant sur des moyens de translation 18, comme l'illustrent plus en détail les figures 4 à 9.

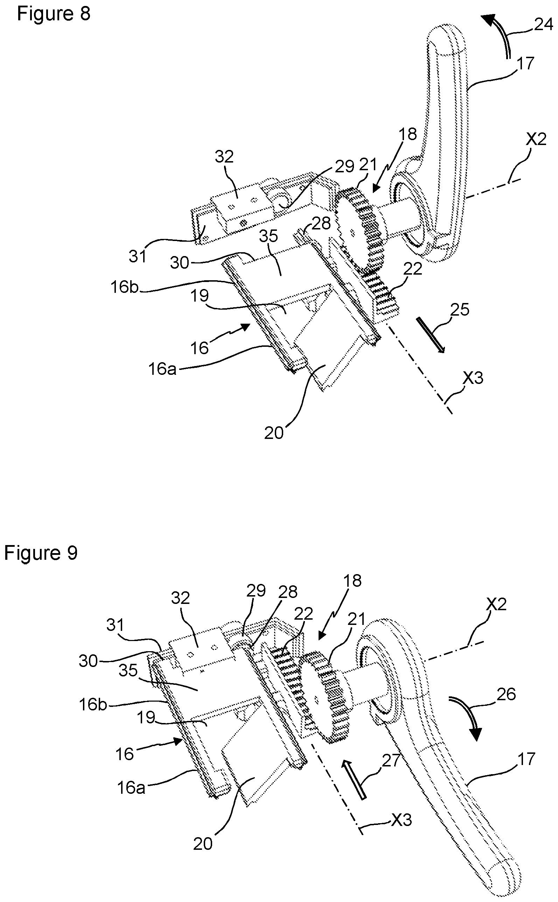

L'organe d'ouverture et de fermeture 16 comporte une première partie 16a définissant une ouverture 19 et une paroi inclinée 20 s'étendant en-dessous de cette ouverture 19, comme l'illustrent notamment les figures 8 et 9. Cet organe d'ouverture et de fermeture 16 comprend également une seconde partie 16b disposée dans le prolongement de la première partie 16a et définissant une paroi horizontale 35.

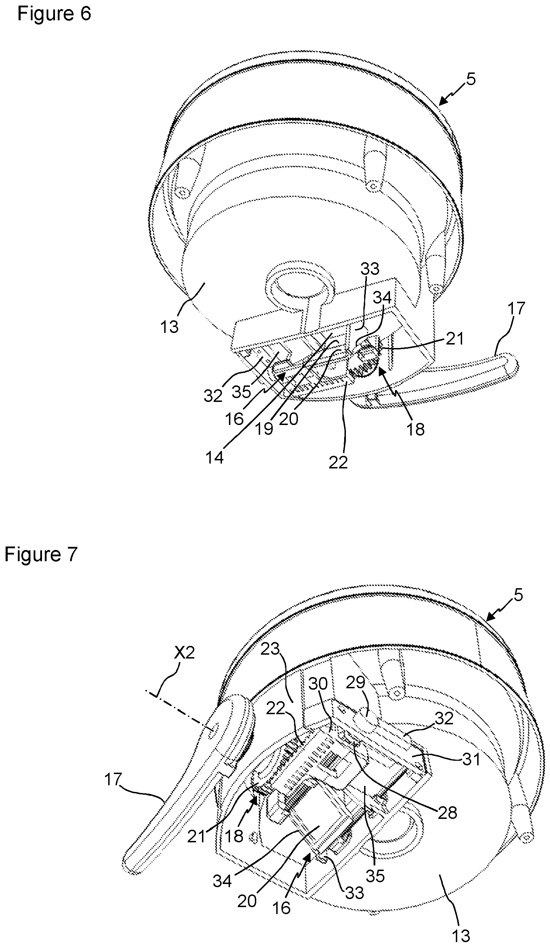

Les moyens de translation 18 comportent un système pignon 21 et crémaillère 22. Le levier de manœuvre 17 est monté à pivotement selon un second axe X2 horizontal, vis-à-vis de la paroi 23 du réservoir de stockage 5, comme l'illustrent notamment les figures 5 et 7. Le pignon 21 est assujetti au levier de manœuvre 17 et tourne selon cet axe X2 lors de l'actionnement dudit levier de manœuvre 17. Ce pignon 21 engrène avec la crémaillère 22, la rotation du pignon 21 dans un sens ou dans l'autre entrainant la translation de la crémaillère respectivement dans un sens ou dans l'autre, selon un troisième axe X3 horizontal illustré en figures 8 et 9. L'organe d'ouverture et de fermeture 16 est monté en liaison glissière vis-à-vis du fond 13 du réservoir de stockage 5, selon ce troisième axe X3. Cet organe d'ouverture et de fermeture 16 est assujetti à la crémaillère 22. Ainsi, comme l'illustre la figure 8, l'actionnement en rotation du levier de manœuvre 17 dans le sens de la première flèche 24 selon le second axe X2, entraîne une translation de l'organe d'ouverture et de fermeture 16 dans le sens de la seconde flèche 25 selon le troisième axe X3. Inversement, comme l'illustre la figure 9, l'actionnement en rotation du levier de manœuvre 17 dans le sens de la troisième flèche 26 selon le second axe X2, entraîne une translation de l'organe d'ouverture et de fermeture 16 dans le sens de la quatrième flèche 27 selon le troisième axe X3.

Lorsque le levier de manœuvre 17 est en position verticale vers le haut, comme l'illustrent les figures 1, 4, 5 et 8, la paroi horizontale 35 obture l'orifice 14. Inversement, lorsque le levier de manœuvre 17 est en position horizontale vers l'avant, comme l'illustrent les figures 2, 6, 7 et 9, l'ouverture 19 et la paroi inclinée 20 sont positionnées sous l'orifice 14, ce qui libère cet orifice 14 et autorise le transfert de la mouture de café du réservoir de stockage 5 vers le porte-filtre 6.

Un ressort (non illustré) est monté entre un plot 28 qui s'emboîte sur une première extrémité du ressort et un logement 29 qui réceptionne une seconde extrémité du ressort. Le plot 28 est agencé à l'extrémité arrière 30 de l'organe d'ouverture et de fermeture 16 et le logement 29 est agencé sur un rebord 31 du réservoir de stockage 5, comme l'illustrent les figures 5, 7, 8 et 9. Lorsque l'extrémité arrière 30 de l'organe d'ouverture et de fermeture 16 est en appui contre le rebord 31, dans la position d'ouverture correspondant à l'actionnement du levier de manœuvre vers sa position horizontale avant, tel qu'illustré en figures 7 et 9 notamment, le ressort est comprimé entre le plot 28 et le logement 29. Lorsque le levier de manœuvre 17 est lâché, le ressort se détend et assure le retour en position de l'organe d'ouverture et de fermeture 16 en position fermée, lequel se déplace alors dans le sens de la seconde flèche 25, ce qui fait pivoter ledit levier de manœuvre 17 dans le sens de la première flèche 24 et le ramène en position verticale vers le haut, illustrée notamment en figures 5 et 8.

La machine 1 comprend un capteur 32 agencé sur le rebord 31, par exemple un switch, qui est activé lorsque l'extrémité arrière 30 de l'organe d'ouverture et de fermeture 16 vient contre le rebord 31, c'est-à-dire dans la position ouverte dans laquelle l'ouverture 19 et la paroi inclinée 20 sont disposées sous l'orifice 14. L'activation du capteur 32 entraîne le mise en marche du moteur 12 et la rotation de la turbine 9, ce qui pousse la mouture de café au travers de l'orifice 14 et de l'ouverture 19, ladite mouture étant alors guidée par la pente de la paroi inclinée 20 durant sa chute dans le porte-filtre 6. La paroi inclinée 20 est orientée de manière à guider la mouture de café vers le centre du porte-filtre 6, comme l'illustre notamment la figure 3.

Le réservoir de stockage 5 comprend en-dessous de son fond 13 un organe de nettoyage se présentant sous la forme d'une paroi verticale 33 munie d'un pan incliné 34 disposant d'une pente identique à celle de la paroi inclinée 20, comme l'illustrent les figures 5 et 6. Le pan incliné 34 est attenant à la paroi inclinée 20, de sorte à racler ladite paroi inclinée 20 durant le déplacement de l'organe d'ouverture et de fermeture 16 de la position ouverte à la position fermée, et inversement. Le nettoyage régulier de la paroi inclinée 20 évite l'accumulation de mouture de café sur celle-ci, due notamment à l'humidité présente du fait de la vapeur et de la condensation. Cela permet de doser précisément la mouture de café tombant dans le porte-filtre 6, à chaque activation du levier de manœuvre 17.

La description précédente d'un mode préférentiel de conception n'a pas un caractère limitatif. Cette mise en œuvre préférentielle de la machine 1 permet avantageusement de simplifier sa conception et son coût de fabrication.

De nombreuses variantes restent toutefois envisageables, notamment quant à la position du réservoir de stockage 5 et de son orifice 14, au-dessus du porte-filtre 6. Selon la position entre lesdits éléments, la pente de la paroi inclinée 20 sera ajustée pour guider convenablement la mouture de café vers le centre du porte-filtre 6, durant son transfert. On peut également envisager un organe de manœuvre différent du levier de manœuvre 17, par exemple une molette. On peut également prévoir des moyens de translation 18 différents du système pignon 21 et crémaillère 22, selon la position de l'organe de manœuvre et de l'organe d'ouverture et de fermeture 16 sur la machine 1.

## Revendications

1. Machine à café (1) comportant une zone d'infusion (7), un réservoir de stockage (5) de café moulu agencé au-dessus de la zone d'infusion (7) et un dispositif de transfert de mouture du réservoir de stockage (5) vers la zone d'infusion à travers un orifice (14), le dispositif de transfert comportant un organe d'ouverture et de fermeture (16) de l'orifice (14), mobile entre une position ouverte et une position fermée, **caractérisée en ce que** l'organe d'ouverture et de fermeture (16) de l'orifice comporte une partie (16a) ouverte comprenant une paroi inclinée (20) configurée pour être positionnée sous l'orifice (14) et pour diriger vers la zone d'infusion (7) la mouture passant au travers de cet orifice (14), en position d'ouverture, et pour être décalée de l'orifice (14), en position fermée, et **en ce que** le dispositif de transfert comporte un organe de nettoyage (33) de ladite paroi inclinée (20) lors du passage de la position ouverte à la position fermée et réciproquement.

2. Machine à café (1) selon la revendication 1, **caractérisée en ce que** la paroi inclinée (20) est configurée pour diriger la mouture vers le centre de la zone d'infusion (7).

3. Machine à café (1) selon l'une des revendications 1 ou 2, **caractérisée en ce que** l'organe de nettoyage comporte une paroi verticale (33) coopérant avec la paroi inclinée (20) pour la nettoyer.

4. Machine à café (1) selon l'une des revendications 1 à 3, **caractérisée en ce que** le dispositif de transfert comporte des moyens de translation (18) de l'organe d'ouverture et de fermeture (16) de l'orifice (14), de la position ouverte vers la position fermée et réciproquement.

5. Machine à café (1) selon l'une des revendications 1 à 4, **caractérisée en ce que** l'organe d'ouverture et de fermeture (16) de l'orifice (14) comporte une paroi horizontale (35) qui obstrue l'orifice en position fermée.

6. Machine à café (1) selon l'une des revendications 1 à 5 **caractérisée en ce que** le dispositif de transfert de mouture comporte un levier de manœuvre (17) de l'organe d'ouverture et de fermeture (16) de l'orifice (14).

7. Machine à café (1) selon la revendication 6, **caractérisée en ce que** le levier de manœuvre (17) est mobile entre une position verticale dans laquelle l'organe d'ouverture et de fermeture (16) de l'orifice (14) est en positon fermée, et une position horizontale dans laquelle l'organe d'ouverture et de fermeture de l'orifice est en positon ouverte.

8. Machine à café (1) selon l'une des revendications 6 ou 7, **caractérisée en ce que** le dispositif de transfert de mouture comporte un système pignon/crémaillère (21, 22), le levier de manœuvre (17) étant assujetti au pignon (21) et la crémaillère (22) étant assujettie à l'organe d'ouverture et de fermeture (16) de l'orifice (14).

9. Machine à café (1) selon l'une des revendications 1 à 8, **caractérisée en ce que** le dispositif de transfert de mouture comporte un ressort de rappel de l'organe d'ouverture et de fermeture (16) de l'orifice (14), de la position ouverte à la position fermée.

10. Machine à café (1) selon l'une des revendications 1 à 9, **caractérisée en ce que** le dispositif de transfert de mouture comporte un disque (10) entrainé en rotation par un moteur (12), la mise en route du moteur étant commandée par le déplacement en position ouverte de l'organe d'ouverture et de fermeture (16) de l'orifice (14).

11. Machine à café (1) selon la revendication 10, **caractérisée en ce que** le disque (10) est entrainé en rotation selon un axe vertical (X1), le moteur (12) étant agencé au centre du disque selon cet axe vertical.

## Patentansprüche

1. Kaffeemaschine (1), die eine Brühzone (7), einen Behälter zum Aufbewahren (5) von gemahlenem Kaffee, der über der Brühzone (7) eingerichtet ist, und eine Vorrichtung zum Transferieren von Kaffeepulver aus dem Aufbewahrungsbehälter (5) durch eine Öffnung (14) hindurch zur Brühzone umfasst, wobei die Transfervorrichtung ein Element zum Öffnen und Schließen (16) der Öffnung (14) umfasst, das zwischen einer geöffneten Stellung und einer geschlossenen Stellung beweglich ist, **dadurch gekennzeichnet, dass** das Element zum Öffnen und Schließen (16) der Öffnung einen offenen Teil (16a) umfasst, der eine schrägstehende Wand (20) umfasst, die so konfiguriert ist, dass sie in Öffnungsstellung unter der Öffnung (14) positioniert ist und das Kaffeepulver, das durch diese Öffnung (14) tritt, zur Brühzone (7) lenkt, und so, dass sie in geschlossener Stellung zur Öffnung (14) versetzt ist, und dadurch, dass die Transfervorrichtung ein Element zum Reinigen (33) der schrägstehenden Wand (20) beim Übertritt von der geöffneten Stellung zur geschlossenen Stellung und umgekehrt umfasst.

2. Kaffeemaschine (1) nach Anspruch 1, **dadurch gekennzeichnet, dass** die schrägstehende Wand (20) so konfiguriert ist, dass sie das Kaffeepulver zur Mitte der Brühzone (7) lenkt.

3. Kaffeemaschine (1) nach einem der Ansprüche 1 oder 2, **dadurch gekennzeichnet, dass** das Reinigungselement eine vertikale Wand (33) umfasst, die mit der schrägstehenden Wand (20) zusammenwirkt, um dieselbe zu reinigen.

4. Kaffeemaschine (1) nach einem der Ansprüche 1 bis 3, **dadurch gekennzeichnet, dass** die Transfervorrichtung Mittel zum Verschieben (18) des Elements zum Öffnen und Schließen (16) der Öffnung (14) von der geöffneten Stellung zur geschlossenen Stellung und umgekehrt umfasst.

5. Kaffeemaschine (1) nach einem der Ansprüche 1 bis 4, **dadurch gekennzeichnet, dass** das Element zum Öffnen und Schließen (16) der Öffnung (14) eine horizontale Wand (35) umfasst, die in geschlossener Stellung die Öffnung verschließt.

6. Kaffeemaschine (1) nach einem der Ansprüche 1 bis 5, **dadurch gekennzeichnet, dass** die Vorrichtung zum Transferieren von Kaffeepulver einen Hebel zum Betätigen (17) des Elements zum Öffnen und Schließen (16) der Öffnung (14) umfasst.

7. Kaffeemaschine (1) nach Anspruch 6, **dadurch gekennzeichnet, dass** der Betätigungshebel (17) zwischen einer vertikalen Stellung, in der sich das Element zum Öffnen und Schließen (16) der Öffnung (14) in geschlossener Stellung befindet, und einer horizontalen Stellung beweglich ist, in der sich das Element zum Öffnen und Schließen der Öffnung in geöffneter Stellung befindet.

8. Kaffeemaschine (1) nach einem der Ansprüche 6 oder 7, **dadurch gekennzeichnet, dass** die Vorrichtung zum Transferieren von Kaffeepulver ein Ritzel-/Zahnstange- (21, 22) System umfasst, wobei der Betätigungshebel (17) dem Ritzel (21) unterworfen ist und die Zahnstange (22) dem Element zum Öffnen und Schließen (16) der Öffnung (14) unterworfen ist.

9. Kaffeemaschine (1) nach einem der Ansprüche 1 bis 8, **dadurch gekennzeichnet, dass** die Vorrichtung zum Transferieren von Kaffeepulver eine Feder zum Rückstellen des Elements zum Öffnen und Schließen (16) der Öffnung (14) von der geöffneten Stellung zur geschlossenen Stellung umfasst.

10. Kaffeemaschine (1) nach einem der Ansprüche 1 bis 9, **dadurch gekennzeichnet, dass** die Vorrichtung zum Transferieren von Kaffeepulver eine Scheibe (10) umfasst, die von einem Motor (12) drehend angetrieben wird, wobei das Ingangsetzen des Motors von der Verlagerung des Elements zum Öffnen und Schließen (16) der Öffnung (14) in die geöffnete Stellung gesteuert wird.

11. Kaffeemaschine (1) nach Anspruch 10, **dadurch gekennzeichnet, dass** die Scheibe (10) entlang einer vertikalen Achse (X1) drehend angetrieben wird, wobei der Motor (12) entlang dieser vertikalen Achse in der Mitte der Scheibe eingerichtet ist.

## Claims

1. Coffee machine (1) comprising an infusion zone (7), a reservoir (5) for storing ground coffee arranged above the infusion zone (7) and a device for transferring ground coffee from the storage reservoir (5) to the infusion zone through an orifice (14), the transfer device comprising a member (16) for opening and closing the orifice (14), able to move between an open position and a closed position, **characterised in that** the member (16) for opening and closing the orifice comprises an open part (16a) comprising an inclined wall (20) configured so as to be positioned under the orifice (14) and to direct towards the infusion zone (7) the ground coffee passing through this orifice (14), in the open position, and to be offset from the orifice (14), in the closed position, and **in that** the transfer device comprises a member (33) for cleaning said inclined wall (20) when passing from the open position to the closed position and vice versa.

2. Coffee machine (1) according to claim 1, **characterised in that** the inclined wall (20) is configured so as to direct the ground coffee towards the centre of the infusion zone (7).

3. Coffee machine (1) according to claim 1 or claim 2, **characterised in that** the cleaning member comprises a vertical wall (33) cooperating with the inclined wall (20) in order to clean it.

4. Coffee machine (1) according to any of claims 1 to 3, **characterised in that** the transfer device comprises means (18) for translating the member (16) for opening and closing the orifice (14), from the open position to the closed position and vice versa.

5. Coffee machine (1) according to any of claims 1 to 4, **characterised in that** the member (16) for opening and closing the orifice (14) comprises a horizontal wall (35) that obstructs the orifice in the closed position.

6. Coffee machine (1) according to any of claims 1 to 5, **characterised in that** the device for transferring ground coffee comprises a lever (17) for manoeuvring the member (16) for opening and closing the orifice (14).

7. Coffee machine (1) according to claim 6, **characterised in that** the manoeuvring lever (17) is able to move between a vertical position in which the member (16) for opening and closing the orifice (14) is in the closed position, and a horizontal position in which the member for opening and closing the orifice is in the open position.

8. Coffee machine (1) according to either claim 6 or claim 7, **characterised in that** the device for transferring ground coffee comprises a pinion/rack system (21, 22), the manoeuvring lever (17) being fixed to the pinion (21) and the rack (22) being fixed to the member (16) for opening and closing the orifice (14).

9. Coffee machine (1) according to any of claims 1 to 8, **characterised in that** the device for transferring ground coffee comprises a spring for returning the member (16) for opening and closing the orifice (14), from the open position to the closed position.

10. Coffee machine (1) according to any of claims 1 to 9, **characterised in that** the device for transferring ground coffee comprises a disc (10) rotated by a motor (12), the starting of the motor being controlled by the movement, into the open position, of the member (16) for opening and closing the orifice (14).

11. Coffee machine (1) according to claim 10, **characterised in that** the disc (10) is rotated on a vertical axis (X1), the motor (12) being arranged at the centre of the disc on this vertical axis.
